# EUROPÄISCHE PATENTSCHRIFT

(11) **EP 3 105 994 B1**
(45) Veröffentlichungstag und Bekanntmachung des Hinweises auf die Patenterteilung: **22.11.2017**
(21) Anmeldenummer: 15700563.8
(22) Anmeldetag: 14.01.2015
(51) Int. Cl.: H05B 33/08

(54) **SPANNUNGSKONVERTER FÜR DEN BETRIEB VON LEUCHTMITTELN**
VOLTAGE CONVERTER FOR OPERATING LUMINAIRES
CONVERTISSEUR DE TENSION POUR FAIRE FONCTIONNER DES MOYENS D'ÉCLAIRAGE

(30) Priorität: 10.02.2014 DE 102014202363
(43) Veröffentlichungstag der Anmeldung: 21.12.2016
(73) Patentinhaber: Tridonic GmbH & Co. KG, 6851 Dornbirn (AT)
(72) Erfinder: ONDRISEK, Thomas, 1230 Wien (AT); MÜNDLE, Klaus, 6800 Feldkirch (AT)
(74) Vertreter: Rupp, Christian
(86) Internationale Anmeldenummer: PCT/EP2015/050533
(87) Internationale Veröffentlichungsnummer: WO 2015/117797

(56) Entgegenhaltungen:
- EP-A1- 2 683 220
- DE-A1- 10 013 216
- DE-A1-102006 000 810

## Beschreibung

Die Erfindung bezieht sich auf einen Spannungskonverter zur Bereitstellung einer Spannung zum Betrieb wenigstens eines Leuchtmittels, insbesondere einer oder mehreren LEDs. Die Erfindung bezieht sich ebenso auf ein System mit einem Spannungskonverter und einem Stromregler zur Regelung des Stroms durch das Leuchtmittel, und auf ein Verfahren zum Betreiben eines Leuchtmittels ausgehend von einer zur Verfügung gestellten Spannung.

Ein solcher als Konstantspannungs- (constant voltage) Konverter ausgestalteter Spannungskonverter stellt ausgangsseitig eine DC-Spannung von beispielsweise 12 Volt oder 24 Volt bereit. An dem Ausgang dieses Konverters können LED-Module angeschlossen werden, die typischerweise eine einfache Stromregelung implementiert haben, beispielsweise durch einen analogen Stromregler.

Beim Betreiben von LEDs muss gewährleistet werden, dass die vom Spannungskonverter erzeugten und an den LEDs anliegende Spannung ausreichend hoch ist. Diese Spannung soll höher als die Flussspannung der LEDs sein, um ein Leuchten der LEDs zu ermöglichen.

Die Ausgangsspannung des Spannungskonverters muss nunmehr so gewählt sein, dass einerseits die Flussspannung des LED Moduls erreicht ist, andererseits soll sie auch nicht zu weit über der Flussspannung der LED Strecke liegen, da andernfalls unnötig elektrische Energie im Stromregler abgebaut werden muss.

Aus dem Stand der Technik DE 10 2006 000 810 D4 ist ein adaptiver Spannungskonverter bekannt, wobei die Adaptivität dahingehend zu verstehen ist, das beim Einschalten des Spannungskonverters dieser seine DC-Ausgangsspannung konstant erhöht, bis ein Stromfluss durch die angeschlossene LED-Strecke detektiert wird. Der Spannungskonverter hält dann dauerhaft die Ausgangsspannung, bei der er den Stromfluss detektierten konnte.

Nachteilig ist bei diesem Stand der Technik die Tatsache, dass die Einstellung der Ausgangsspannung nur beim Einschalten des Spannungskonverters stattfinden kann. Für diese Einstellung ist es in der Tat notwendig, die Ausgangsspannung von einem ersten Wert unterhalb der Flussspannung bis zu einem zweiten Wert oberhalb der Flussspannung zu verändern, wobei nach Detektieren eines Stromflusses die Ausgangsspannung konstant gehalten wird. Um im laufenden Betrieb der LED-Strecke eine weitere Einstellung durchführen zu können, muss also die LED-Strecke zunächst ausgeschaltet werden und die Ausgangsspannung ausgehend von einem ersten Wert unterhalb der Flussspannung wieder langsam erhöht werden. Dies würde im laufenden Betrieb zu einem Ausschalten der LED-Strecke während der Zeitdauer der Einstellung der Ausgangsspannung führen, was natürlich nicht gewünscht ist.

Insgesamt kann nach dem Stand der Technik nur einmal die Ausgangsspannung derart eingestellt werden, dass die Verlustleistung im Stromregler minimiert wird. Allerdings kann sich diese Verlustleistung im laufenden Betrieb wieder erhöhen, z.B. weil der Spannungsabfall von LEDs - die sogenannte Flussspannung - schwanken kann, insbesondere durch thermische Änderungen.

Angesichts dieses Problems ist es Aufgabe der vorliegenden Erfindung, die Verlustleistung und die damit einhergehende Wärmeentwicklung nicht nur beim Einschalten des Spannungskonverters sondern auch zu einem späteren Zeitpunkt bei eingeschalteter LED-Strecke minimieren zu können. Eine Einstellung der Ausgangsspannung des Spannungskonverters sollte entsprechend auch während des Betriebs der LED-Strecke ermöglicht werden.

Die Erfindung setzt nunmehr daran an, dass die Adaptivität der DC-Ausgangsspannung nicht nur einmalig bei einem Einschalten des Konverters, sondern auch zu einem späteren Zeitpunkt im Betrieb der LED-Strecke durchführbar ist.

Nach einem ersten Aspekt der Erfindung ist ein Spannungskonverter zur Bereitstellung einer DC-Spannung zum Betrieb wenigstens einer LED-Strecke vorgesehen. Der Konverter ist dazu ausgelegt, a.) eine sich vorzugsweise in einem Spannungsbereich oberhalb der Flussspannung der LED-Strecke unter Messung des LED-Stroms vorzugsweise wenigstens einmal auf- und ab verändernde DC-Spannung auszugeben. Weiterhin ist der Konverter dazu ausgebildet, b.) den Arbeitspunkt der DC-Spannung abhängig von dieser Messung einzustellen.

Insbesondere im Zuge des Absenkens kann die Spannung unter die Flusspannung fallen.

Der Konverter kann dazu ausgelegt sein, die Schritte a.) und b.) kontinuierlich, quasi-kontinuierlich oder periodisch mit wenigstens einer Wiederholung durchzuführen.

Der Konverter kann dazu ausgelegt sein, die Spannung über der LED-Strecke, d.h. die an der LED-Strecke anliegende Spannung, direkt oder indirekt zu erfassen.

Die Frequenz der sich auf- und ab verändernden DC-Spannung kann in einem Bereich zwischen 0.05 Hz und 5Hz ausgewählt werden.

Der DC-Spannung kann eine PWM-Modulation überlagert sein. Der Konverter kann dann dazu ausgelegt sein, die Schritte a.) und b.) nur in den Einschaltzeitdauern des PWM-Signals durchzuführen.

Nach einem weiteren Aspekt der Erfindung ist ein System vorgesehen, das einen derartigen Spannungskonverter und einen durch den Spannungsregler bzw. Spannungskonverter gespeisten Stromregler aufweist. Der Stromregler ist zur konstanten Regelung des Stroms durch die LED-Strecke vorgesehen.

Der Stromregler und die LED-Strecke können in einem LED-Modul angeordnet sein.

Nach einem weiteren Aspekt der Erfindung ist ein Verfahren zum Betreiben einer LED-Strecke ausgehend von einer DC-Spannung vorgesehen. Das Verfahren umfasst den Schritt einer a.) Bereitstellung einer DC-Spannung zum Betrieb einer LED-Strecke. Vorgesehen ist, dass sich die DC-Spannung vorzugsweise in einem Spannungsbereich oberhalb der Flussspannung der LED-Strecke unter Messung des LED-Stroms vorzugsweise auf- und ab verändert. Das Verfahren umfasst den Schritt einer b.) Einstellung des Arbeitspunkts der DC-Spannung abhängig von dieser Messung.

Die Schritte a.) und b.) können kontinuierlich, quasi-kontinuierlich oder periodisch mit wenigstens einer Wiederholung durchgeführt werden.

Die Spannung über der LED-Strecke kann direkt oder indirekt erfasst werden.

Die DC-Spannung kann dabei mit einer Frequenz in einem Bereich zwischen 0.05 Hz und 5Hz auf- und ab verändert werden.

Der DC-Spannung kann eine PWM-Modulation überlagert werden. Die Schritte a.) und b.) werden nur in den Einschaltzeitdauern des PWM-Signals durchgeführt.

Die DC-Spannung kann einem Stromregler zugeführt werden. Dieser Stromregler regelt den Strom durch die LED-Strecke konstant.

Nach einem weiteren Aspekt der Erfindung ist ein Verfahren zum Betreiben einer LED-Strecke ausgehend von einer DC-Spannung vorgesehen. Das Verfahren umfasst den Schritt einer a.) Bereitstellung einer DC-Spannung zum Betrieb einer LED-Strecke. Die DC-Spannung verändert sich vorzugsweise in einem Spannungsbereich oberhalb der Flussspannung der LED-Strecke unter Messung des LED-Stroms. Weiterhin ist vorgesehen eine b.) Ermittlung des Gradients der Impedanz der LED-Strecke oder eines LED-Moduls aufweisend die LED-Strecke. Vorgesehen ist eine c.) Einstellung des Arbeitspunkts der DC-Spannung (Vout) abhängig von dieser Ermittlung.

Der Schritt c.) kann folgende Schritte aufweisen. Der Gradient der Impedanz wird mit einem Referenzwert verglichen c1.). Die DC-Spannung wird abhängig von diesem Vergleich erhöht, gesenkt oder unverändert beibehalten c2.).

Die Schritte a.), b.) und c.) können im Betrieb der LED-Strecke durchgeführt werden. Vorzugsweise werden diese Schritte mehrmals wiederholt. Vorzugsweise werden diese Schritte kontinuierlich oder periodisch wiederholt.

Die Adaptivität der DC-Ausgangsspannung kann also im Betrieb der LED-Strecke durchgeführt werden, z.B. periodisch oder kontinuierlich.

Dazu wird eine Impedanz-Messung durchgeführt. Dass heißt der Spannungskonverter ermittelt sowohl den Strom, wie auch die Spannung an der LED-Strecke. Diese Strom- und Spannungsmessung erfolgt vorzugsweise dauerhaft im Betrieb der LED-Strecke.

Nunmehr erfolgt entweder eine inhärent vorhandene Modulation der Ausgangsspannung oder es erfolgt eine gezielte Modulation der Ausgangsspannung, um somit örtlich den Verlauf der Impedanzkennlinie der LED-Strecke zu ermitteln, insbesondere den Gradienten am Arbeitspunkt. Die inhärent vorhandene Modulation ergibt sich bereits, wenn die Ausgangsspannung des DC-Spannungskonverter bereits einen vorhandenen Rippel aufweist. Ein derartiger Rippel bzw. Restwelligkeit der Ausgangsspannung ergibt sich bekanntlich z.B. wenn der Spannungskonverter ausgehend von einer Netzspannung versorgt wird.

Der Konverter kann somit seinen Arbeitspunkt der DC-Ausgangsspannung kontinuierlich derart verändern, dass der Gradient der Impedanz erkennen lässt, dass sich die Ausgangsspannung in einem zulässigen Bereich knapp oberhalb der Flussspannung der LED-Strecke befindet.

Der Gradient der Impedanz am Arbeitspunkt wird vorzugsweise mit einem gewünschten Gradient bzw. mit einem Soll-Gradient verglichen. Der Soll-Gradient ist erreicht, wenn die Spannung an der LED-Strecke knapp oberhalb der Flussspannung der LED-Strecke sich befindet. So werden Verlustleistungen im Stromregler effizient minimiert. Falls der ermittelte Gradient der Impedanz am Arbeitspunkt kleiner als der Soll-Gradient ist, so wird die Ausgangsspannung gesenkt. Umgekehrt, bei einem ermittelten Gradient oberhalb des Soll-Gradients, wird die Ausgangsspannung erhöht.

Somit kann es im Betrieb der LED Spannung zu einem Wandern des Arbeitspunktes des Konverters kommen. Dieses Wandern kann z.B. von der Temperatur bzw. Umgebungstemperatur bedingt sein, und dient dazu, die Verlustleistungen im Stromregler zu minimieren.

Die angeführte Spannungsmodulation, die nunmehr zu Messzwecken zur Adaptivität notwendig ist, würde normalerweise zu sichtbaren Schwankungen im Licht-Output führen, indessen ist die lokale Stromregelung am LED-Modul in der Lage, diese Effekte auszuregeln.

Wenn eine künstliche Modulation der Ausgangsspannung erfolgt, ist die Frequenz relativ niedrig, vorzugsweise in der Größenordnung von 1 Hz, da das menschliche Auge Helligkeitsschwankungen mit dieser Frequenz relativ schlecht auflöst.

Die erfindungsgemäße Technik kann mit dem Ansatz kombiniert werden, dass beispielsweise in einer Startphase ermittelt wird, ob bereits bei einer Ausgangsspannung von 12 V Strom auf der LED-Strecke fließt, und wenn nicht die Ausgangsspannung auf beispielsweise 24 V erhöht wird. In diesem genannten Bereich von 12 Volt DC, oder 24 Volt DC, kann dann er Arbeitspunkt gemäß der vorliegenden Erfindung optimiert werden. Beim Einschalten des Spannungskonverters kann also die Ausgangsspannung über einen Betriebsbereich von z.B. unterhalb von 12 V bis oberhalb von 24 V kontinuierlich erhöht werden. Sobald Strom durch die LEDs fließt kann dann der Arbeitspunkt gemäß der vorliegenden Erfindung optimiert werden.

Zum Dimmen kann der DC-Ausgangsspannung ein PWM Signal, niederfrequent aufmoduliert sein. Die Arbeitspunktbestimmung durch entsprechende Messung erfolgt dann natürlich nur in den Einschaltzeitdauern des PWM Signals.

Dabei kann vorgesehen sein, dass bei niedrigen Dimmwerten und somit geringen Tastverhältnissen des PWM Signals die Arbeitspunktoptimierung gemäß der vorliegenden Erfindung selektiv abgeschaltet wird.

Nachfolgend wird die Erfindung außerdem in Hinblick auf die Figuren beschrieben.
Fig. 1 zeigt schematisch den Aufbau einer erfindungsgemäßen Betriebsschaltung zur Versorgung einer LED-Strecke,
Fig. 2 zeigt eine schematische Ansicht einer weiteren erfindungsgemäßen Betriebsschaltung,
Fig. 3 zeigt einen typischen Verlauf von elektrischen Größen des in Fig. 2 gezeigten Ausführungsbeispiels, und
Fig. 4 zeigt eine Synchronisierung zwischen einer PWM-Modulation der Ausgangsspannung und einer erfindungsgemäßen Messung des LED-Stroms und der Ausgangsspannung.

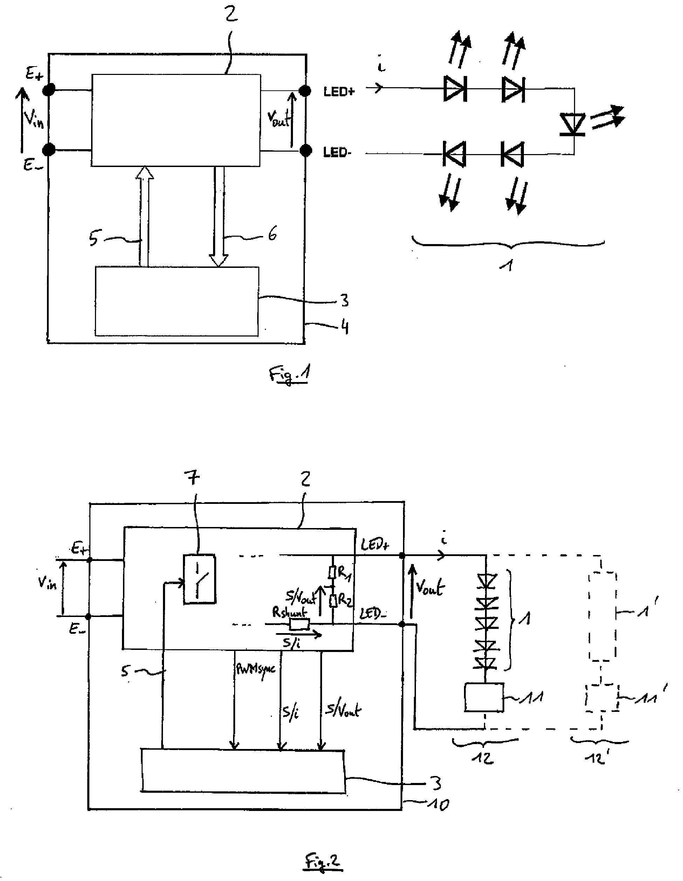

In Fig. 1 ist ein Ausführungsbeispiel einer Betriebsschaltung 4 zur Versorgung von Leuchtmitteln gezeigt, insbesondere in Form eines Konverters zur Versorgung von LEDs bzw. zur Versorgung einer LED-Strecke.

Die Betriebsschaltung 4 wird eingangsseitig von einer Eingangsspannung Vin in Form z.B. einer Wechselspannung bzw. Netzspannung gespeist. Die Betriebsschaltung 4 umfasst zwei Eingangsklemmen E+, E- zum Zuführen der Eingangsspannung Vin. Die Eingangsspannung Vin kann, wie in Fig. 1 gezeigt, einem Spannungskonverter 2 des Betriebsgeräts 4 zugeführt werden.

Alternativ kann das Betriebsgerät 4 eingangsseitig einen Gleichrichter und/oder einen Filter (nicht gezeigt) aufweisen. Dem Spannungskonverter 2 wird somit eine gleichgerichtete, und gegebenenfalls gefilterte, Wechselspannung bzw. Netzspannung zugeführt. Vorzugsweise wird die Netzspannung nach dem Gleichrichter und/oder Filter noch einer Leistungsfaktorkorrektur-Schaltung (nicht gezeigt) zugeführt, bevor sie zum Spannungskonverter 2 weitergeleitet wird. Die Eingangsspannung des Spannungskonverters 2 ist in diesem Fall eine näherungsweise konstante Busspannung gegebenenfalls aufweisend eine Restwelligkeit bzw. einen Rippel.

Alternativ kann die Eingangsspannung des Spannungskonverters 2 auch eine Gleichspannung bzw. eine konstante Spannung wie z.B. eine Batteriespannung sein, wobei dann der Gleichrichter und die Leistungsfaktorkorrektur-Schaltung optional sind.

Der Spannungskonverter bzw. Spannungswandler 2 wandelt die gegebenenfalls gleichgerichtete und gefilterte Eingangsspannung Vin in eine Gleichspannung bzw. DC-Spannung. Aufgabe des Spannungskonverters 2 ist es, ausgangsseitig eine konstante Spannung Vout zu erzeugen. Die Amplitude der Ausgangsspannung Vout ist steuerbar bzw. regelbar.

Der Spannungskonverter 2 kann z.B. in Form eines Abwärtswandlers bzw. Buck-Konverters ausgestaltet sein. Mittels eines solchen Wandlers kann z.B. eine Eingangsspannung Vin in Form einer Netzspannung mit einer Amplitude im Bereich zwischen 120 und 240 V in eine konstante Ausgangsspannung Vout von 12 V umgewandelt werden. Alternativ zum Abwärtswandler kann der Spannungskonverter 2 auch als Synchronwandler ausgestaltet sein. Diese zwei Ausführungsformen sind Beispiele für einen Spannungskonverter 2 ohne galvanische Trennung.

Alternative Topologien mit galvanischer Trennung sind für den Spannungskonverter 2 auch einsetzbar. Z.B. kann der Wandler als Sperrwandler, Eintaktflusswandler oder Gegentaktflusswandler ausgestaltet sein. Solche Ausführungen des Spannungskonverters 2, entweder ohne oder mit galvanischer Trennung, sind an sich bekannt.

Die Ausgangsspannung Vout des Spannungskonverters 2 liegt an zwei Ausgangsanschlüssen LED+, LED- des Betriebsgeräts 4 an. An diese Ausgangsanschlüsse LED+, LED- sind nunmehr Leuchtmittel wie z.B. LEDs in Form einer LED-Strecke 1 anschließbar. Die in Fig. 1 gezeigte LED-Strecke 1 umfasst fünf in Serie geschaltete LEDs, die vorzugsweise mit einer Ausgangsspannung Vout von 12 V betrieben werden. Die LED-Strecke 1 kann mehr oder weniger LEDs aufweisen, wobei dann die Amplitude der Ausgangsspannung Vout vorzugsweise anzupassen ist. Die Amplitude der Ausgangsspannung Vout soll insbesondere höher als die Flussspannung der LED-Strecke 1 sein.

Im Betriebsgerät 4 der Fig. 1 ist eine Steuereinheit 3 zum Ansteuern des Spannungskonverters 2 vorgesehen. Abhängig von Rückführsignalen kann die Steuereinheit 3 den Spannungskonverter 2 steuern. Die Rückführsignale stammen z.B. aus dem Bereich des Spannungskonverters 2. Abhängig von der Ausgangsspannung Vout als Rückführsignal kann die Steuereinheit 3 den Spannungskonverters 2 derart ansteuern, dass die Ausgangsspannung Vout auf einen Sollwert geregelt wird. Das Zurückführen von Messwerten ausgehend vom Spannungswandler 2 zurück zur Steuereinheit 3 ist in Fig. 1 mit dem Referenzzeichen 6 gekennzeichnet. Das Referenzzeichen 5 bezeichnet ein von der Steuereinheit 3 erzeugtes Steuersignal zum Ansteuern des Spannungskonvertexs 2.

Fig. 2 zeigt eine schematische Ansicht einer weiteren erfindungsgemäßen Betriebsschaltung 10. Der Aufbau und der Betrieb der Betriebsschaltung 10 entsprechen grundsätzlich Aufbau und Betrieb der in Fig. 1 gezeigten Betriebsschaltung 4.

Das Steuersignal 5 dient typischerweise zur Ansteuerung mindestens eines Schalters 7 des Spannungskonverters 2. Z.B. umfasst der als Abwärtswandler ausgestaltete Spannungskonverters 2 in bekannter Weise einen Schalter 7, wobei abhängig vom Ein- und Ausschalten des Schalters die Höhe der Ausgangsspannung Vout einstellbar ist. Der als Sperrwandler ausgestaltete Spannungskonverter 2 umfasst einen Schalter 7, der in bekannter Weise auf der Primärseite eines Übertrager angeordnet ist, wobei die Ausgangsspannung Vout auf der Sekundärseite des Übertragers zur Verfügung gestellt wird.

Parallel zu den Ausgangsanschlüssen LED+, LED- und somit parallel zur LED-Strecke 1 kann ein ohmscher Spannungsteiler R1, R2 vorgesehen sein, an dem ein Signal S/Vout abgegriffen und der Steuereinheit 3 als Rückführsignal zugeführt werden kann. Das Messsignal S/Vout ist repräsentativ für die Ausgangsspannung Vout, die zum Betreiben der LED-Strecke 1 erzeugt wird.

Der ohmsche Spannungsteiler R1, R2 ist beispielhaft für eine direkte Messung der Ausgangsspannung Vout. Die Erfassung der Ausgangsspannung Vout kann alternativ auch indirekt erfolgen. Z.B. bei einem Spannungskonverter 2 mit galvanischer Trennung aufweisend einen Übertrager ist es möglich, eine auf der Primärseite des Übertragers anliegende Spannung zu messen und auf die Ausgangsspannung Vout auf der Sekundärseite des Übertragers unter Berücksichtigung des Windungsverhältnis des Übertragers zu schließen. Bei einem Sperrwandler lässt sich z.B. die Ausgangsspannung Vout indirekt über eine Multiplikation der Eingangsspannung des Sperrwandlers mit dem Windungsverhältnis ermitteln.

In Serie zur LED-Strecke ist im Betriebsgerät 4 weiterhin ein Messwiderstand bzw. ein Shunt Rshunt geschaltet. An dem Messwiderstand Rshunt wird ein Messsignal S/i abgegriffen und der Steuereinheit 3 zugeführt. Dieses Messsignal S/i gibt den Strom durch die LED-Strecke 1 wieder. Auch alternative bekannte Mittel zur Messung der Ausgangsspannung Vout und/oder des Stroms durch die LED-Strecke 1 können hier eingesetzt werden.

An den Ausgangsanschlüssen LED+, LED- ist wiederum die LED-Strecke 1 geschaltet. In Fig. 2 ist zusätzlich eine Konstantstromquelle 11 in Serie zur LED-Strecke 1 vorgesehen. Diese Konstantstromquelle 11 dient als Stromregler, um den Strom durch die LED-Strecke konstant zu halten, d.h. auf einen Strom-Sollwert zu regeln. Die LED-Strecke 1 und der Stromregler 11, vorzugsweise der lineare Stromregler 11, sind in Serie geschaltet und sind Teil eines LED-Moduls 12, welches an den Ausgangsanschlüssen LED+, LED- angeschlossen ist.

Der Stromregler 11 kann alternativ auch in der Betriebsschaltung 10 integriert werden. In diesem Fall kann der Stromregler z.B. in Serie zwischen dem Spannungskonverter 2 und der LED-Strecke 1 d.h. in Serie zwischen dem Spannungskonverter 2 und den Ausgangsanschlüssen LED+, LED- angeordnet sein.

Die Betriebsschaltung eignet sich auch zum Betreiben von mehreren LED-Strecken bzw. mehreren LED-Modulen. Dies ist in Fig. 2 in gestrichelter Linie dargestellt. Parallel zum LED-Modul 12 ist ein optionales weiteres LED-Modul 12' dargestellt, das wiederum eine LED-Strecke 1' in Serie zu einem Stromregler 11' umfasst.

An dem Ausgang des Spannungskonverters 2 können also ein oder mehrere LED-Module angeschlossen werden, wobei diese LED-Module typischerweise eine einfache Stromregelung implementiert haben, beispielsweise durch einen analogen Stromregler.

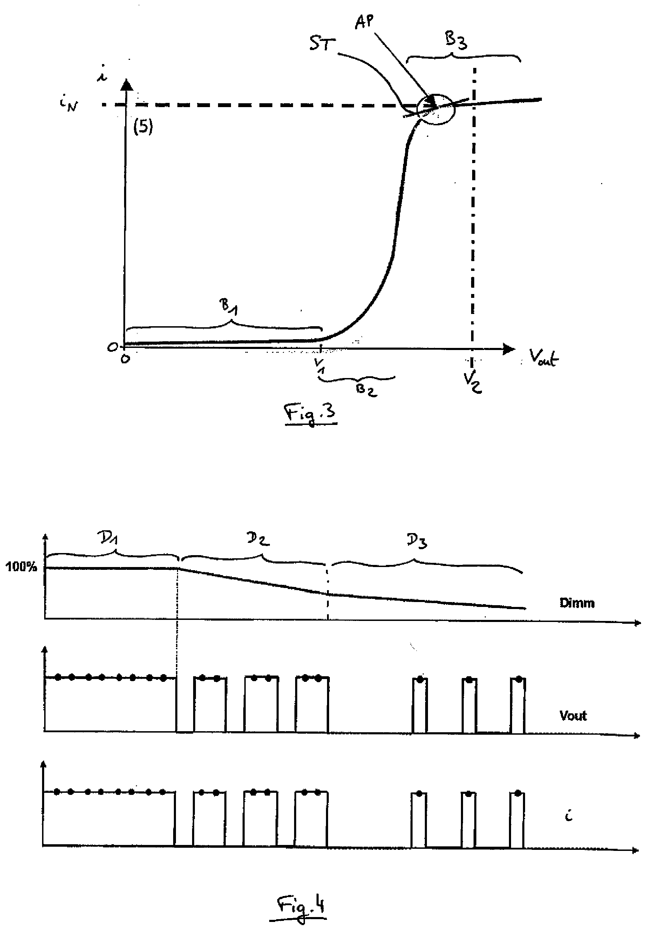

Fig. 3 zeigt einen typischen Verlauf von elektrischen Größen des in Fig. 2 gezeigten Ausführungsbeispiels.

Gezeigt wird insbesondere der Verlauf vom Strom i durch die LED-Strecke 1 in Abhängigkeit von der Ausgangsspannung Vₒᵤₜ d.h. in Abhängigkeit von der über die LED-Strecke 1 bzw. über das LED-Modul 12 abfallenden Spannung.

Die Strom-Spannungs-Kennlinie weist einen s-förmigen Verlauf auf. Bei einer niedrigen Ausgangsspannung Vout zwischen null und einem ersten Wert V1 fließt kein bzw. annähernd kein Strom durch die LEDs. Dieser Bereich ohne LED-Strom und somit ohne Leuchten der LEDs ist in Fig. 3 mit B1 bezeichnet.

Ab diesem Wert V1 nimmt der Strom i mit der Spannung Vout zu, und zwar vorzugsweise exponential. Das Referenzzeichen B2 bezeichnet den Bereich der nahezu exponentiellen Strom-Spannungs-Kennlinie. Sobald die Ausgangsspannung Vout die Flussspannung der LEDs erreicht, sind die LEDs leitend und die LEDs leuchten.

Wenn sich die Ausgangsspannung Vout nunmehr weiter erhöht beginnt der LED-Strom i wieder abzuflachen. Dies entspricht einem Bereich B3 für die Ausgangsspannung Vout. Dieses Abflachen der Kennlinie ist darauf zurückzuführen, dass nunmehr ein Stromregler 12 zur Regelung des Stroms durch die LED-Strecke 1 eingesetzt wird. Es stellt sich somit ein Arbeitspunkt AP ein für den Spannungskonverter bzw. für die DC-Ausgangsspannung Vout. An diesem Arbeitspunkt AP ergibt sich ein Nennstrom i = iN.

Um den Nennstrom iN erzielen zu können, soll die Ausgangsspannung einen Mindestwert erreichen. Dieser Mindestwert für die Ausgangsspannung bleibt nicht immer konstant sondern ist wiederum insbesondere vom Strom, vom Typ der LEDs, von der Anzahl der LEDs, von der Temperatur und vom Stromregler abhängig.

Bekannte Spannungskonverter erzeugen in diesem Zusammenhang bewusst eine zu hohe Ausgangsspannung. Dies führt einerseits dazu, dass der Nennstrom iN erreicht werden kann. Andererseits muss unnötig elektrische Energie im Stromregler abgebaut werden, was auch noch zu einem unerwünschten Temperaturanstieg führt.

Der eingangs erwähnte adaptive Spannungskonverter aus dem Stand der Technik bietet die Möglichkeit, beim Einschalten des Spannungskonverters die DC-Ausgangsspannung dahingehend optimal einzustellen, dass im Stromregler keine bzw. wenig elektrische Energie abgebaut werden muss. Im Laufe des LED-Betriebs kann allerdings diese einmal eingestellte DC-Ausgangsspannung möglicherweise zu steigenden Verlustleistungen im Stromregler führen.

Erfindungsgemäß wird also vorgeschlagen, eine DC-Ausgangsspannung Vout bereitzustellen, die sich vorzugsweise in einem Spannungsbereich oberhalb der Flussspannung der LED-Strecke verändert. (Insbesondere im Zuge des Absenkens kann die Spannung unter die Flusspannung fallen.)

Dabei wird kontinuierlich oder in diskreten zeitlichen Abständen der LED-Strom gemessen. Der Arbeitspunkt der DC-Ausgangsspannung Vout wird dann abhängig von dieser Messung eingestellt. Somit kann auch während des LED-Betriebs die Ausgangsspannung im Sinne einer Minimierung der Verlustleistung im Stromregler optimiert werden.

Die LED-Strecke 1 wird vorzugsweise wie folgt ausgehend vom Spannungskonverter 2 betrieben:
- Beim Starten des Spannungskonverters 2 wird die Ausgangsspannung Vout zunächst auf einen Maximalwert V2 eingestellt. Dieser Maximalwert V2 ist vorzugsweise oberhalb der Flussspannung der LED-Strecke. Dieser Maximalwert V2 soll auch für den Spannungskonverter und für die LED-Strecke betriebssicher sein.
- Danach wird aus den Messsignalen S/i und S/Vout, die jeweils für den LED-Strom und die Ausgangsspannung Vout repräsentativ sind, der Gradient der Impedanz der LED-Strecke bzw. die Steigung der Strom-Spannungs-Kennlinie ermittelt. Diese Steigung ist in Fig. 3 mit dem Referenzzeichen ST bezeichnet. Die Steigung ST ist ein Maß für die Steilheit der Strom-Spannungs-Kennlinie.
- Der Gradient der Impedanz bzw. die Steigung der Strom-Spannungs-Kennlinie wird anschließend von der Steuereinheit 3 mit einem Referenzwert verglichen. Dieser Referenzwert ist vorzugsweise in der Steuereinheit 3 gespeichert. Dieser Referenzwert kann unabhängig von der LED-Strecke benutzt werden. D.h. die Steuereinheit 3 vergleicht der gerade ermittelte Gradient immer mit demselben Referenzwert. Alternativ kann der Referenzwert adaptiv sein und von der LED-Strecke abhängen.
- Falls der Gradient die Referenzspannung nicht erreicht hat, wird die Ausgangsspannung Vout gesenkt. Vorzugsweise wird die Ausgangsspannung Vout derart gesenkt, dass beim Übergang zwischen dem alten und dem neuen Wert für die Ausgangsspannung Vout keine Änderung der von der LED-Strecke erzeugten Helligkeit vom menschlichen Auge bemerkbar ist. Vorzugsweise wird die Ausgangsspannung Vout um einen Wert verändert bzw. gesenkt, der so klein ist wie möglich. Vorzugsweise kann der Wert der Ausgangsspannung Vout um 0,2 V verändert werden.
- Diese Arbeitspunktoptimierung wird vorzugsweise regelmäßig durchgeführt, um immer einen möglichst geringen Leistungsverlust im Stromregler zu haben. Es wird dann die Ausgangsspannung Vout schrittweise gesenkt, solange der Gradient die Referenzspannung nicht erreicht.

Erfindungsgemäß kann die Richtung der Veränderung der Ausgangsspannung Vout vom Vergleich mit dem Referenzwert abhängen. Ist der ermittelte Gradient nämlich kleiner als der Referenzwert, so wird die Ausgangsspannung Vout reduziert. Andersrum wird die Ausgangsspannung Vout erhöht, wenn der Gradient größer als der Referenzwert sein sollte. Die Veränderung der Ausgangsspannung Vout sollte für das menschliche Auge nicht Form einer Helligkeitsschwankung erkennbar sein.

Diese Verringerung oder Erhöhung der Ausgangsspannung Vout wird dadurch durchgeführt, dass der der Sollwert für die Ausgangsspannung Vout entsprechend geändert wird und dass die Steuereinheit 3 dann seine Ansteuerung des Schalters 7 entsprechend ändert. Die Zeitdauer zwischen zwei Arbeitspunktoptimierungen, d.h. zwischen zwei Ermittlungen des Gradients, sollte lang genug sein, dass sich die Ausgangsspannung Vout auch auf den größeren oder kleineren Sollwert einstellt lässt.

Der erste Schritt der Einstellung der Ausgangsspannung Vout auf den Maximalwert V2 ist nicht zwingend notwendig. Alternativ kann beim Einschalten des Konverters 2 die Ausgangsspannung schrittweise oder kontinuierlich erhöht werden, bis ein Strom durch die LED-Strecke fließt. Danach kann wiederum eine oder vorzugsweise mehrere Arbeitspunktoptimierungen stattfinden, um die Ausgangsspannung Vout erfindungsgemäß jeweils zu erhöhen oder verringern.

Um den Gradient bzw. die Steigung ST zu ermitteln, wird die Ausgangsspannung Vout ausgehend von ihrem eingestellten Wert leicht verringert und erhöht, um den Verlauf der Impedanzkennlinie der LED-Strecke ermitteln zu können. Dabei ist eine minimale Anzahl an Strom- und Spannungsmessungen S/i, S/Vout erforderlich. Bei jeder Messung soll die Ausgangsspannung Vout mindestens um einen Mindestwert verändert werden. Vorzugsweise ist eine Mindestanzahl an Messwerten festgelegt, um eine stabile Ermittlung der Steigung ST zu gewährleisten. Vorzugsweise sollen 16 Spannungsmesswerte und die jeweils 16 entsprechenden Strommesswerte erfasst werden.

Auf Basis dieser vorzugsweise digitalisierten Messwerte wird von der Steuereinheit 3 eine Regressionsanalyse durchgeführt, um daraus einen geschätzten Wert für die Steigung ST zu ermitteln. Die Steuereinheit 3 kann dabei verschiedenen Schätzfunktionen benutzen. Vorzugsweise wird die Steigung ST mit Hilfe einer Theil-Sen Schätzfunktion ermittelt.

Abhängig von dieser Ermittlung der Steigung ST bzw. des Gradients wird die Ausgangsspannung Vout des Konverters 2 verändert, und somit der Arbeitspunkt im Sinne einer Verringerung des Leistungsverlusts im Stromregler optimiert.

Fig. 4 zeigt eine Synchronisierung zwischen einer PWM-Modulation der Ausgangsspannung und einer erfindungsgemäßen Messung des LED-Stroms und der Ausgangsspannung.

Der in Fig. 4 gezeigte Bereich D1 bezieht sich auf den Betrieb der LED-Strecke bei einem Dimmwert von 100%. Die Ausgangsspannung Vout und der LED-Strom i weisen stetige Werte auf. Die Punkte sollen die Zeitpunkte darstellen, zu denen die Ausgangsspannung Vout und der LED-Strom i zur Vermeidung von Leistungsverlusten im Stromregler erfindungsgemäß gemessen werden.

Zum Dimmen kann der DC-Ausgangsspannung Vout ein PWM Signal, niederfrequent aufmoduliert sein. Dies ist in den Bereichen D2 und D3 gezeigt. Das entsprechende PWM-Modul kann z.B. innerhalb des Konverters 2 vorgesehen sein. Die Arbeitspunktbestimmung durch entsprechende Messung von Ausgangsspannung Vout und LED-Strom i erfolgt dann nur in den Einschaltzeitdauern des PWM-Signals, s. wiederum die Punkte in den Einschaltzeitdauern in Fig. 4.

Da die PWM-Modulation im Spannungskonverter 2 und die Arbeitspunktbestimmung in der Steuereinheit 3 stattfinden, ist eine Synchronisierung zwischen den beiden Bauteilen notwendig. Auf Fig. 2 ist entsprechend gezeigt, dass der Konverter 2 ein Synchronisierungssignal PWMsync zu der Steuereinheit 3 zuführt. Mit Hilfe des Synchronisierungssignals PWMsync weiß die Steuereinheit, wann die Einschaltzeitdauern des PWM-Signals erfolgen und somit wann die Messung durchgeführt werden kann.

Mit sinkendem Dimmwert wird auch das Tastverhältnis des PWM-Signals kleiner, s. z.B. den Bereich D3 im Vergleich zum Bereich D2 mit höheren Dimmwerten. Bei einem niedrigen Dimmwert unterhalb eines Schwellwerts oder bei einem geringen Tastverhältnis des PWM-Signals unterhalb eines Schwellwerts kann die Arbeitspunktoptimierung gemäß der vorliegenden Erfindung selektiv abgeschaltet werden.

Die Modulation der DC-Ausgangsspannung Vout kann muß nicht "künstlich" durch einen Regler herbeigeführt werden, sondern kann sich auch automatisch als Rippel am Ausgang des Konverters ergeben, beispielsweise durch die relativ geringe Kapazität der Kondensatoren am Ausgang oder durch eine träge Regelschleife, die einen von der Netzspannung bewirkten Rippel nicht vollständig ausregelt.

## Patentansprüche

1. Spannungskonverter zur Bereitstellung einer DC-Spannung (Vout) zum Betrieb wenigstens einer LED-Strecke (1),
wobei der Konverter dazu ausgelegt ist:
a.) eine sich vorzugsweise in einem Spannungsbereich oberhalb der Flussspannung der LED-Strecke (1) unter Messung des LED-Stroms (iL) wenigstens einmal auf-und ab verändernde DC-Spannung (Vout) auszugeben, und
b.) abhängig von dieser Messung den Arbeitspunkt der DC-Spannung (Vout) einzustellen.

2. Spannungskonverter nach Anspruch 1,
wobei der Konverter dazu ausgelegt ist, die Schritte a.) und b.) kontinuierlich, quasi-kontinuierlich oder periodisch mit wenigstens einer Wiederholung durchzuführen.

3. Spannungskonverter nach Anspruch 1 oder 2,
wobei der Konverter dazu ausgelegt ist, die Spannung über der LED-Strecke (1) direkt oder indirekt zu erfassen.

4. Spannungskonverter nach einem der vorhergehenden Ansprüche,
wobei die Frequenz der sich auf- und ab verändernden DC-Spannung (Vout) in einem Bereich zwischen 0.05 Hz und 5Hz liegt.

5. Spannungskonverter nach einem der vorhergehenden Ansprüche,
wobei der DC-Spannung (Vout) eine PWM-Modulation überlagert ist, wobei der Konverter dazu ausgelegt ist, die Schritte a.) und b.) nur in den Einschaltzeitdauern des PWM-Signals durchzuführen.

6. System aufweisend einen Spannungskonverter nach einem der vorhergehenden Ansprüche und einen durch den Spannungsregler gespeisten Stromregler, der den Strom (iL) durch die LED-Strecke (1) konstant regelt.

7. System nach Anspruch 6,
wobei der Stromregler und die LED-Strecke (1) in einem LED-Modul angeordnet sind.

8. Verfahren zum Betreiben einer LED-Strecke (1) ausgehend von einer DC-Spannung (Vout),
wobei das Verfahren die folgenden Schritte aufweist:
a.) Bereitstellung einer DC-Spannung (Vout) zum Betrieb einer LED-Strecke (1),
wobei sich die DC-Spannung (Vout) vorzugsweise in einem Spannungsbereich oberhalb der Flussspannung der LED-Strecke (1) unter Messung des LED-Stroms vorzugsweise auf- und ab verändert, und
b.) Einstellung des Arbeitspunkts der DC-Spannung (Vout) abhängig von dieser Messung.

9. Verfahren nach Anspruch 8,
wobei die Schritte a.) und b.) kontinuierlich, quasi-kontinuierlich oder periodisch mit wenigstens einer Wiederholung durchgeführt werden.

10. Verfahren nach Anspruch 8 oder 9,
wobei die Spannung über der LED-Strecke (1) direkt oder indirekt erfasst wird.

11. Verfahren nach einem der Ansprüche 8 bis 10,
wobei die DC-Spannung (Vout) mit einer Frequenz in einem Bereich zwischen 0.05 Hz und 5Hz auf- und ab verändert wird.

12. Verfahren nach einem der Ansprüche 8 bis 11,
wobei der DC-Spannung (Vout) eine PWM-Modulation überlagert wird, wobei die Schritte a.) und b.) nur in den Einschaltzeitdauern des PWM-Signals durchgeführt werden.

13. Verfahren nach einem der Ansprüche 8 bis 12,
wobei die DC-Spannung (Vout) einem Stromregler zugeführt wird, der den Strom durch die LED-Strecke (1) konstant regelt.

14. Verfahren zum Betreiben einer LED-Strecke (1) ausgehend von einer DC-Spannung (Vout),
wobei das Verfahren die folgenden Schritte aufweist:
a.) Bereitstellung einer DC-Spannung (Vout) zum Betrieb einer LED-Strecke (1),
wobei sich die DC-Spannung (Vout) in einem Spannungsbereich oberhalb der Flussspannung der LED-Strecke (1) unter Messung des LED-Stroms verändert,
b.) Ermittlung des Gradients der Impedanz der LED-Strecke (1) oder eines LED-Moduls (12) aufweisend die LED-Strecke (1), und
c.) Einstellung des Arbeitspunkts der DC-Spannung (Vout) abhängig von dieser Ermittlung.

15. Verfahren nach Anspruch 14,
wobei der Schritt c.) folgende Schritte aufweist:
c1.) der Gradient der Impedanz wird mit einem Referenzwert verglichen, und
c2.) die DC-Spannung (Vout) wird abhängig von diesem Vergleich erhöht, gesenkt oder unverändert beibehalten.

16. Verfahren nach Anspruch 14 oder 15,
wobei die Schritte a.), b.) und c.) im Betrieb der LED-Strecke (1) vorzugsweise mehrmals durchgeführt werden, und insbesondere kontinuierlich oder periodisch wiederholt werden.

## Claims

1. A voltage converter for providing a DC voltage (Vout) for operating at least one LED line (1),
wherein the converter is designed to:
a.) output a DC voltage (Vout) which preferably changes at least once upward and downward within a voltage range above the forward voltage in the LED line (1) while measuring the LED current (iL); and
b.) set the operating point of the DC voltage (Vout) depending on said measurement.

2. A voltage converter according to Claim 1,
wherein the converter is designed to carry out the steps a.) and b.) continuously, quasi-continuously or periodically with at least one repetition.

3. A voltage converter according to Claim 1 or 2,
wherein the converter is designed to detect the voltage over the LED line (1) directly or indirectly.

4. A voltage converter according to any one of the preceding claims,
wherein the frequency of the DC voltage (Vout), which changes upward and downward, is within a range between 0.05 Hz and 5 Hz.

5. A voltage converter according to any one of the preceding claims,
wherein a PWM modulation is superimposed on the DC voltage (Vout), wherein the converter is designed to carry out the steps a.) and b.) only in the switched-on time of the PWM signal.

6. A system having a voltage converter according to any one of the preceding claims and a current regulator supplied by the voltage regulator, which constantly regulates the current (iL) through the LED line (1).

7. A system according to Claim 6,
wherein the current regulator and the LED line (1) are arranged in an LED module.

8. A method for operating a LED line (1) based on a DC voltage (Vout), wherein the method has the following steps:
a.) provision of a DC voltage (Vout) for operating a LED line (1),
wherein the DC voltage (Vout) changes preferably upward and downward preferably within a voltage range above the forward voltage of the LED line while measuring the LED current, and
b.) setting the operating point of the DC voltage (Vout) depending on said measurement.

9. A method according to Claim 8,
wherein the steps a.) and b.) are carried out continuously, quasi-continuously or periodically with at least one repetition.

10. A method according to Claim 8 or 9,
wherein the voltage over the LED line (1) is detected directly or indirectly.

11. A method according to any one of Claims 8 to 10,
wherein the DC voltage (Vout) is changed upward and downward with a frequency in a range of between 0.05 Hz and 5 Hz.

12. A method according to any one of Claims 8 to 11,
wherein a PWM modulation is superimposed on the DC voltage (Vout), wherein the steps a.) and b.) are carried out only in the switched-on time of the PWM signal.

13. A method according to any one of Claims 8 to 12,
wherein the DC voltage (Vout) is fed to the current regulator, which constantly regulates the current through the LED line (1).

14. A method for operating a LED line (1) based on a DC voltage (Vout),
wherein the method has the following steps:
a.) Provision of a DC voltage (Vout) for operating a LED line (1),
wherein the DC voltage (Vout) changes within a voltage range above the forward voltage of the LED line (1) while measuring the LED current,
b.) determining the gradient of the impedance of the LED line (1) or of a LED module (12) having the LED line (1), and
c.) setting the operating point of the DC voltage (Vout) depending on said determination.

15. A method according to Claim 14,
wherein the step c.) has the following steps:
c1.) the gradient of the impedance is compared with a reference value, and
c2.) the DC voltage (Vout) is increased, lowered or maintained unchanged depending on said comparison.

16. A method according to Claim 14 or 15,
wherein the steps a.), b.) and c.) are carried out preferably several times during the operation of the LED line (1), and are repeated in particular continuously or periodically.

## Revendications

1. Convertisseur de tension destiné à la fourniture d'une tension CC (Vout) pour le fonctionnement d'au moins une rampe de LED (1),
le convertisseur étant conçu pour :
a.) délivrer une tension CC (Vout) qui varie au moins une fois à la hausse et à la baisse de préférence dans une plage de tension supérieure à la tension de flux de la rampe de LED (1), avec mesure du courant de LED (iL), et
b.) pour régler le point de travail de la tension CC (Vout) en fonction de cette mesure.

2. Convertisseur de tension selon la revendication 1,
le convertisseur étant conçu pour effectuer les étapes a.) et b.) de façon continue, quasi continue ou périodique avec au moins une répétition.

3. Convertisseur de tension selon la revendication 1 ou 2, le convertisseur étant conçu pour détecter directement ou indirectement la tension présente sur la rampe de LED (1).

4. Convertisseur de tension selon l'une des revendications précédentes,
la fréquence de la tension CC (Vout) variant à la hausse et à la baisse se situant dans une plage entre 0,05 Hz et 5 Hz.

5. Convertisseur de tension selon l'une des revendications précédentes,
une modulation PWM se superposant à la tension CC (Vout), le convertisseur étant conçu pour effectuer les étapes a.) et b.) uniquement pendant les durées d'activation du signal PWM.

6. Système présentant un convertisseur de tension selon l'une des revendications précédentes et un régulateur de courant, alimenté par le régulateur de tension, qui règle de façon constante le courant (iL) traversant la rampe de LED (1).

7. Système selon la revendication 6,
le régulateur de courant et la rampe de LED (1) étant disposés dans un module de LED.

8. Procédé de fonctionnement d'une rampe de LED (1) à partir d'une tension CC (Vout), le procédé présentant les étapes suivantes :
a.) fourniture d'une tension CC (Vout) destinée au fonctionnement d'une rampe de LED (1),
la tension CC (Vout) variant de préférence à la hausse et à la baisse de préférence dans une plage de tension supérieure à la tension de flux de la rampe de LED (1), avec mesure du courant de LED, et
b.) réglage du point de travail de la tension CC (Vout) en fonction de cette mesure.

9. Procédé selon la revendication 8,
les étapes a.) et b.) étant effectuées de façon continue, quasi continue ou périodique avec au moins une répétition.

10. Procédé selon la revendication 8 ou 9,
la tension présente sur la rampe de LED (1) étant détectée de façon directe ou indirecte.

11. Procédé selon l'une des revendications 8 à 10,
la tension CC (Vout) étant modifiée à la hausse et à la baisse à une fréquence dans une plage entre 0,05 Hz et 5 Hz.

12. Procédé selon l'une des revendications 8 à 11, une modulation PWM étant superposée à la tension CC (Vout), les étapes a.) et b.) étant réalisées uniquement pendant les durées d'activation du signal PWM.

13. Procédé selon l'une des revendications 8 à 12, la tension CC (Vout) étant acheminée à un régulateur de courant qui règle de façon constante le courant traversant la rampe de LED (1).

14. Procédé de fonctionnement d'une rampe de LED (1) à partir d'une tension CC (Vout), le procédé présentant les étapes suivantes :
a.) fourniture d'une tension CC (Vout) destinée au fonctionnement d'une rampe de LED (1),
la tension CC (Vout) variant dans une plage de tension supérieure à la tension de flux de la rampe de LED (1), avec mesure du courant de LED,
b.) détermination du gradient de l'impédance de la rampe de LED (1) ou d'un module de LED (12) présentant la rampe de LED (1), et
c.) réglage du point de travail de la tension CC (Vout) en fonction de cette détermination.

15. Procédé selon la revendication 14,
l'étape c.) présentant les étapes suivante :
c1.) le gradient de l'impédance est comparé à une valeur de référence, et
c2.) la tension CC (Vout) est augmentée, abaissée ou maintenue inchangée en fonction de cette comparaison.

16. Procédé selon la revendication 14 ou 15,
les étapes a.), b.) et c.) étant effectuées de préférence plusieurs fois pendant le fonctionnement de la rampe de LED (1), et étant en particulier répétées de façon continue ou périodique.
